# EUROPEAN PATENT APPLICATION

(11) **EP 2 922 008 A1**
(43) Date of publication of application: **23.09.2015**
(21) Application number: 14160266.4
(22) Date of filing: 17.03.2014
(51) Int. Cl.: G06Q 30/02

(54) **Public display arrangement**

(71) Applicant: Kone Corporation, 00330 Helsinki (FI)
(72) Inventor: Salmikuukka, Jukka, 02970 Espoo (FI); Bergman, Kim, 00200 Helsinki (FI); Hiltunen, Jussi, 00200 Helsinki (FI); Kronkvist, Kenneth, 01350 Vantaa (FI)
(74) Representative: Papula Oy

(57) **Abstract**

In public displays various kind of information are shown. The public display may be controlled by using a mobile device. Instead of controlling content on the public screen the controlling may be performed on the screen of the mobile device. The controlling can be done in real time or an address for the service may be stored as a bookmark so that the service can be accessed later. When the public display is identified it can be assumed that the service requester is or was in the vicinity of the public display. The information can be used, for example, for verifying the validity of locally issued discount coupons and similar.

## Description

### FIELD OF THE INVENTION

The invention relates to public displays and controlling of such display. Particularly the invention relates to requesting a service from such public display.

### BACKGROUND OF THE INVENTION

Modern information technology has brought different contents and user interface methods available in various places where it was not available before by using public display. Public display is a display connectable to a computing device and configured to show digital content in a public place, such as an elevator. One example is a public showing of material that is controlled by touching a screen or other controller. Then the device being controlled reacts in accordance with the received commands. In some applications earlier versions have included a display and a separate keyboard or other controlled but afterwards been replaced by a touch screen. A common problem with both approaches is that these devices need to be kept clean because hygiene reasons. A person who is wishing to avoid touching public keying systems, such as elevator controls, may use gloves, however, many times touch screens need to be used with bare finger. Furthermore, touching causes higher need for cleaning as the screen needs to be clean for not only hygienic reasons but also for the better technical functionality and aesthetic reasons.

There are many problems related to public displays in addition to the desire to avoid touching the touch screen. For example, if the application is wishing to show private information the privacy cannot be guaranteed as everybody in the vicinity of the screen can see the content. Furthermore, if the screen is located, for example, in an elevator the person seeing the content stays in the elevator only for limited period of time. Thus, the person might not be ready with the service when the destination floor is reached. Furthermore, there may be a plurality of people wishing to use the same service, however, it is not possible if there is only one screen with touch input. Thus, there is a need for an arrangement for showing messages with interaction possibility in public places.

### SUMMARY

The invention discloses an arrangement for controlling public displays by using a personal mobile device. In public displays various kind of information are shown. The public display may be controlled by using a mobile device. Instead of controlling content on the public screen the controlling may be performed on the screen of the mobile device. The controlling can be done in real time or an address for the service may be stored as a bookmark so that the service can be accessed later. When the public display is identified it can be assumed that the service requester is or was in the vicinity of the public display. The information can be used, for example, for verifying the validity of locally issued discount coupons and similar.

In an embodiment of the invention a method for controlling a public display in an elevator is disclosed. In the method first a request for a code comprising an identification of a public display is received. The code may comprise also additional information, such as timestamps, access codes and similar, however, they are not necessary for the basic principle of the present invention. As a response to the request a code comprising an identification for at least one public display is generated. Then the code is transmitted to a mobile device. After transmitting the code a service request is received from said mobile device, wherein said service request comprises said identification transmitted to the mobile device. Before executing the service the identification comprised in said service request is verified together with possible additional data, such as a time stamp. Lastly a service is executed in accordance with said service request when said code is verified as valid. The identification mentioned above may be submitted together with other information and at each of the steps the apparatus processing the identification may make modifications to the other information if such information is included. It is possible that the code transmitted as a response to the received request includes only the identification without additional information. Then the device receiving the transmission may incorporate the identification to the following request.

In a further embodiment the invention is implemented as a computer program, which, when executed in a computing device comprising a memory and processor, causes performing the method disclosed above.

In a further embodiment the invention is implemented as an apparatus that is located in a place where a plurality of people may use it. The location may be public, such as an elevator. The apparatus comprises a display for displaying information, a short distance data communication connection for communicating with a mobile device located in the vicinity of the apparatus and a data communication connection for communicating with a controlling device. The controlling device may be a further apparatus implemented within the apparatus or an external server coupled with the apparatus.

The benefits of the invention include the possibility of controlling a public display by using a mobile device in a manner so that the service provider may know the location of the user. The location can be used for providing services directed to those persons in the vicinity of the public display. For example, when the public display is in an elevator it is safe to assume also the persons are in the elevator and will stay there for the time of their journey. This allows avoiding the drawbacks mentioned in the background of the invention by allowing a plurality of users controlling the same display and controlling the display without touching it. This increases hygiene and durability of the devices when they are not touched and may be, if desired, located behind protective cover. Furthermore, the invention enables verifiable local advertising and possibility to continue using the service after leaving the vicinity of the display.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** is a block diagram of an example embodiment, and
**Fig. 2** is a flow chart of an example embodiment of the present invention.

### DETAILED DESCRIPTION OF THE INVENTION

Reference will now be made in detail to the embodiments of the present invention, examples of which are illustrated in the accompanying drawings.

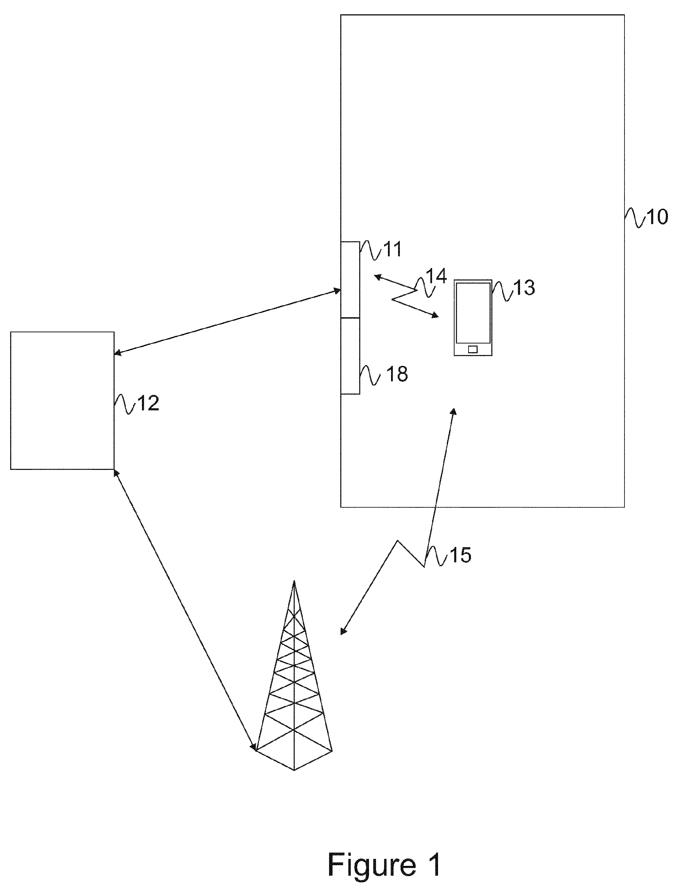

In figure 1 an elevator 10 is illustrated. Typically elevators are controlled by using a car operation panel 18, which typically comprises plurality of control buttons for choosing destination, controlling doors and similar, however, it may also be a touch screen showing images of buttons or other controls that are used accordingly. The embodiment of Figure 1 further comprises a public display 11, which may also be a touch screen, however, in the example of figure 1 it is an ordinary display that may be located behind of a protective cover. The elevator as such is any common elevator having a car operation panel and a public display. The car operation panel 18 installed in the elevator car 10 is both capable of showing and receiving information form a user. The car operation panel 18 and public display 11 are both connected to a server or a controller 12. The server may be in charge of a plurality of functions, for example, receiving all instructions regarding elevator movements. Thus, if a person having a mobile device 13 in the elevator chooses a floor, he chooses it conventionally by using a car operation panel 18 and the server 12 receives this instruction and instructs the elevator controller, which may be incorporated in the same server or implemented as an additional unit. Correspondingly the server 12 may submit information back to the car operation panel 18 or public display 11. For example, if there is a restaurant in the selected floor, it is possible to show lunch menu available on the public display 11. This information may comprise, for example, advertisements or any other information that is addressed to passengers of the elevator car 10. The information may be public or personal, however, in case of personal information the passenger must be identified. The control panel 11 is connected to the server by using any common means used in elevator data communications. The connection may be wired or wireless.

The mobile device 13 may communicate with the public display 11 by using two different means for communicating. The communication can be direct communication 14 by using a short distance network, such as near field communication, Bluetooth, wireless local area network or any other suitable local network mechanism. The content of the communication may be just receiving a token, an identification message or a similar message from the public display or normal full communication including all data transfers. Additionally the communication can be through mobile communication network 15, wherein the mobile communication network 15 is used for communicating with the server 12 that is further configured to communicate with the public display 11 and possibly with the whole elevator system including car operation panel 18. The received token is submitted to the server over the mobile network. From the token the server determines if the person has been in the vicinity of the device to controlled. The use of the token or identification is discussed in more detail later.

The server 12 may be configured to control the public display 11 such that the screen is configured to show information to the passenger. The screen may comprise any information that can be shown on a computer display. For example, on the screen may be advertisements that may have a particular offer that is tied to the time and location. For example, in a barber shop having free during next one hour may send an advertisement to a public display located in an elevator of the same building or neighborhood. In the advertisement a special price may be given for people who can come during the next hour. Then the person seeing the advertisement can confirm if he accepts the advertisement. The server will forward the confirmation to the barber shop. In a further embodiment the advertisement is shown in an elevator with access to the barbershop and the chair is available at the very same moment. By accepting the advertisement the device does not only confirm to the barbershop but may also place a call for the elevator to take the passenger to the floor of the barbershop. If the previous call was made with the same device, it is possible to cancel the previous call if anyone else hasn't called the same floor.

If the person in the elevator car 10 is wishing to learn more information of the product shown in the advertisement he can copy the address of the advertisement from the public display 11 or if the advertisement or message shown on the public display 11 is not interesting the person may skip it. Controls for copying and skipping may be performed by using the mobile device 13. Typically this device is a modern mobile phone or pad-like computer which includes a touch display. Thus, it is possible to show on the screen of the mobile device 13 buttons that include particular captions "Copy" and "Skip". When the user of the mobile device 13 chooses either of these buttons the mobile device 13 sends a request which is addressed to the server 12 controlling the public display 11.

The controls are approved by using a pairing procedure, wherein the mobile device is detected by the public display 11 or car operation panel 18 or any other detecting device in the elevator. Thus, when the mobile device knows the identification of the elevator it can be included in the request and the server 12 may control the public display 11 in the elevator based on the identification. The identification can be used as an access right to use services of the server. A further purpose of the identification is to guarantee that when a person controls a public display over mobile network the server receiving a request is able to send the request information to the correct public display. Thus, even if the identification is done by the car operation panel 18, the information is used as an identification of the public display.

In an embodiment the server 12, or other controlling device controlling the public display 11, is an apparatus comprising at least one processor and at least one memory. The memory includes computer program code for one or more programs, the at least one memory and the computer program code are working together, with the at least one processor, cause the apparatus to perform the above disclosed controlling of public display 12 and executing a service.

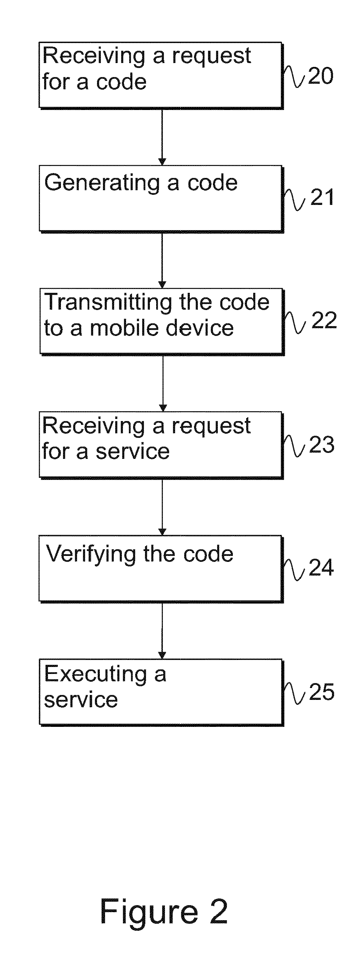

In figure 2 a method according to an embodiment of the invention is disclosed. In the method a system similar to the embodiment of figure 1 is used. The system comprises a public display, such as a public display of the previous example, connected to a server or other computing device. The display is capable of communication with the mobile device by using a suitable short distance communication method, such as NFC, Bluetooth, wireless local area network, Wi-Fi or similar. When a user of a mobile device enters vicinity of such device a following method may be performed.

The method is initiated by receiving a request for a code identifying the display from a mobile device, step 20. The purpose of the code is to guarantee that when a person request a service to be displayed on a display it is shown on the correct display. Furthermore, the code may be used for preventing unauthorized use, such as showing undesired material on the display. This is particularly useful in cases where the actual communication is performed through mobile data connection.

As a response to the request a code identifying at least one display is generated, step 21. The code may comprise an identification string or strings to a plurality of displays which are located in the route of the person using a mobile phone. For example, the person may request such code in an elevator lobby and the code may identify a display in the lobby and in the elevator to which the person is guided. The code is always temporary and thus has an expiration time that is typically short. In addition to the identification of displays there may be a further expiration times for related acts. For example, if the system has offered a file for download a longer time may be set before expiration so that the person can download the file even if he isn't in the vicinity of any of the displays. After the code has been generated it will be transmitted to the mobile device, step 22. The transmission may be done by mobile data communication or local network used for requesting the code.

When the mobile device has received the code it can make service requests to the server, which accordingly receives the requests, step 23. The service request may be request for downloading material, such as offers mentioned with regard to figure 1 or as discussed later in the specification. The service request may include requests that are displayed on the public display or the results of the request may be shown on the display of the mobile device or delivered later, for example, by means of e-mail or other messaging service. The service request is created by the person by using the mobile device, however, when creating such request the mobile device may have received some controls or features from the server or public display when it comprises storage for computer code. This code may be sent together with the code identifying at least one display or it may be requested separately or it may be incorporated into a mobile application the person has installed into the device.

After receiving the service request the server verifies the code, step 24. In this step it is, in practice, verified that the person is or was in the vicinity of the public display identified and is allowed to request such service. When the verification is positive the request service may be executed on the display, step 25.

The above disclosed arrangement can be used in various use cases. The above mentioned displaying lunch menu may be implemented such that the person can order the lunch when seeing the menu on the public display. If the person making the order is not identified then the possibility to place order may be limited to the vicinity of predetermined public displays. For example, if the is a personal restaurant in the first floor of the office building, the order can be placed already in the elevator when the person is travelling towards the restaurant. If the person is identified the service may also be billed from the person. In a further embodiment the person may also see the menu of the next day and preselect the choice so that the persons at the restaurant may estimate how much they need to prepare different dishes.

In a further embodiment the administrator of the public display system may change material shown on the screen. For this application the user of the mobile device must be identified as an administrator. The identification of the public display is used to make the update automatically to only one screen or to a group of screens to which the screen belongs to. For example, if the lunch menu of the previous example is not changed the public display displays the menu of yesterday, the system administrator may change it. If the menu is shown on the public display en in elevator belonging to an elevator group the content may be changed to public displays in each of the elevators belonging to the group.

In a further embodiment the user of the mobile device is in a shopping center. In the elevator an advertisement and a discount coupon are shown on the public display. The person seeing the discount coupon may copy it to the mobile device. The coupon may be incorporated with a time stamp and the identification of the public display. Thus, the validity of the discount coupon may be validated if desired.

In a further embodiment the user is the identification is used for allowing a plurality of devices to control the same public display so that additional information is shown on the screen of the mobile device. For example, in the lunch embodiment the main display shown on the public display may be the same for everybody and the actual selection is performed on the screen of the mobile device and may be provided with additional information, for example, in accordance with the user preferences.

In a variation of the embodiment shown in figure 1 also the user of the mobile device 13 is identified and personalized information is shown on the public display 11. When the user of the mobile device 13 is identified there may be a separate privacy button on the screen of the mobile device 13 so that the person may prevent showing of information that could be confidential or private. In the variation the personalized information can include personalization of public information. For example, when the person passes a plurality of public displays on his/her way in a building the system may keep book on the advertisements already shown to the person. Then, the advertisements shown on a public display may be chosen based on that information. Correspondingly longer advertisements and videos may be shown to the person so that the playback starts on a first screen and is continued on a second screen and so on. Thus, also longer videos can be completely shown to a person who is moving. A person skilled in the art understands that in larger crowds this means that the advertisements are chosen so that as many as possible see new material or a longer video completely. In this embodiment the identification of the mobile device and public display are needed for two different purposes. The identification of the public display is used for similar purposes as described above and the identification of the mobile device is used for choosing the content to be displayed. For choosing the content the identification of the public display does not need to be transmitted to the mobile device, however, it is typically used together with the identification of the mobile device to produce the statistics for choosing content. The identification of the mobile device may be transmitted in various ways, for example, as a separate message to the public display, as part of the request message, or any other suitable signaling or messaging.

In an embodiment the mobile device comprises at least one processor and at least one memory, wherein the memory includes computer program code for one or more programs, the at least one memory and the computer program code are working together, with the at least one processor, cause the apparatus to perform a method disclosed above.

Typically this is done in a form of a mobile application. In an alternative embodiment the mobile device is connected to a webpage comprising the corresponding controls. Thus, the application is then located in server side and used as a service.

The above mentioned method may be implemented as computer software which is executed in a computing device able to communicate with a mobile device. When the software is executed in a computing device it is configured to perform the above described inventive method. The software is embodied on a computer readable medium so that it can be provided to the computing device.

As stated above, the components of the exemplary embodiments can include computer readable medium or memories for holding instructions programmed according to the teachings of the present inventions and for holding data structures, tables, records, and/or other data described herein. Computer readable medium can include any suitable medium that participates in providing instructions to a processor for execution. Common forms of computer-readable media can include, for example, a floppy disk, a flexible disk, hard disk, magnetic tape, any other suitable magnetic medium, a CD-ROM, CD±R, CD±RW, DVD, DVD-RAM, DVD±RW, DVD±R, HD DVD, HD DVD-R, HD DVD-RW, HD DVD-RAM, Bluray Disc, any other suitable optical medium, a RAM, a PROM, an EPROM, a FLASH-EPROM, any other suitable memory chip or cartridge, a carrier wave or any other suitable medium from which a computer can read.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for controlling a public display in an elevator:
receiving a request for a code comprising an identification for a public display;
generating said code comprising said identification of at least one public display;
transmitting said code to a mobile device;
receiving a service request from said mobile device, wherein said service request comprises said identification transmitted to said mobile device;
verifying said identification comprised in said service request; and
executing a service in accordance with said service request when said identification is verified as valid.

2. A method according claim 1, wherein the method further comprises receiving identification of a user from said mobile device.

3. A method according to claims 1 - 2, wherein the method further comprises receiving further control commands said mobile device.

4. A method according to any of preceding claims 1 - 3, wherein said executing a service further comprises sending an internet address for said service.

5. A method according to any of preceding claims 1 - 4, wherein the method further comprises receiving an identification of said mobile device.

6. A method according to claim 5, wherein the method further comprises choosing content to be shown on said public display based on said received identification of said mobile device.

7. A computer program for a server comprising code adapted to cause the following method according to any of claims 1 - 6 when executed on a data-processing system.

8. An apparatus comprising:
a display configured to display information;
a short distance data communication connection configured to communicate with a mobile device located in the vicinity of the apparatus;
a data communication connection configured to communicate with a controlling device;
wherein said apparatus is configured to:
receive a request for a code comprising an identification of said apparatus from said mobile device using said short distance data communication and as a response to said request to transmit a said code comprising an identification of said apparatus;
verify said identification comprised in said service request;
receive a service request from said mobile device, wherein said service request comprises said code transmitted to said mobile device; and
execute said service in accordance with said service request when said identification is verified as valid, wherein said executing comprises displaying information on said display.

9. An apparatus according to claim 8, wherein said control device is an external server.

10. An apparatus according to claim 8 or 9, wherein the apparatus is further configured to receive an identification of a user from said mobile device.

11. An apparatus according to any of preceding claims 8 - 10, wherein the apparatus is further configured to receive further control commands said mobile device.

12. An apparatus according to any of preceding claims 8 - 11, wherein the apparatus is further configured to send an internet address for said service.

13. An apparatus according to any of preceding claims 8 - 10, wherein the apparatus is further configured to receive an identification of said mobile device.

14. An apparatus according claim 13, wherein the apparatus is further configured to choose content to be shown on said public display based on said received identification of said mobile device.

15. An elevator comprising an apparatus according to any of preceding claims 8 - 14.
